# EUROPÄISCHE PATENTSCHRIFT

(11) **EP 1 497 071 B1**
(45) Veröffentlichungstag und Bekanntmachung des Hinweises auf die Patenterteilung: **23.08.2006**
(21) Anmeldenummer: 03746810.5
(22) Anmeldetag: 17.04.2003
(51) Int. Cl.: B23K 26/14, B23K 28/02, B23K 9/095, B23K 10/00, B23K 10/02, B23K 26/06

(54) **Laser-Materialbearbeitungsverfahren und -vorrichtung mit hybriden Prozessen**
Laser material machining process and device using hybrid processes
Procédé et dispositif d'usinage au laser de matériaux à l'aide de process hybrides

(30) Priorität: 19.04.2002 DE 10217678
(43) Veröffentlichungstag der Anmeldung: 19.01.2005
(73) Patentinhaber: Fraunhofer-Gesellschaft zur Förderung der angewandten Forschung e.V., 80686 München (DE)
(72) Erfinder: PETRING, Dirk, NL-6462 AE Kerkrade (NL)
(86) Internationale Anmeldenummer: PCT/DE2003/001302
(87) Internationale Veröffentlichungsnummer: WO 2003/089185

(56) Entgegenhaltungen:
- EP-A- 1 166 948
- WO-A-01/05550
- US-A- 4 870 244
- US-A- 5 006 688
- US-A- 5 073 687
- US-A- 5 298 715
- PATENT ABSTRACTS OF JAPAN vol. 008, no. 124 (M-301), 9. Juni 1984 (1984-06-09) & JP 59 027791 A (HITACHI SEISAKUSHO KK), 14. Februar 1984 (1984-02-14)

## Beschreibung

Die Erfindung betrifft ein Verfahren zur Bearbeitung von Werkstoffen und eine Vorrichtung zum hybriden Bearbeitung von Werkstoffen gemäß dem Oberbegriff der Ansprüche 1 und 12 (siehe, z.B., EP-A-1 166 948).

Derartige Verfahren und Vorrichtungen zur Materialbearbeitung, bei der mindestens ein Bearbeitungswerkzeug in Form eines Laserstrahls in Kombination mit anderen Bearbeitungswerkzeugen, zum Beispiel Laserstrahlen und/oder Lichtbögen und/oder Plasmastrahlen und/oder einem oder mehrerer anderen Energie- oder Teilchenstrahlen eingesetzt wird, zum Beispiel Flamme, spanende Werkzeuge, Wasserstrahl, Elektronenstahl sind bekannt. Als repräsentative Beispiele können hierzu die Veröffentlichungen, Schutzrechtsanmeldungen und Schutzrechte des Fraunhofer ILT zum sogenannten Laser-Lichtbogen Hybridschweißen herangezogen werden.

Die Hybridtechnik beruht dabei auf der Kombination des Laserstrahlschweißens mit dem Metallschutzgasschweißen, im folgenden MSG genannt, also dem Metall-Inert-Gas-, im folgenden MIG genannt, oder Metall-Aktiv-Gas-Schweißen, im folgenden MAG genannt oder mit dem Wolfram-Inert-Gasschweißen, im folgenden WIG genannt.

Dazu wird auf folgende Schutzrechte verwiesen:
- Düsenanordnung zum gleichzeitigen Schweißbearbeiten mit einem Laserstrahl und mit einem Lichtbogen (DE 196 27 803 C1) ;
- Verfahren zum Verschweißen von Werkstücken (DE 195 00 512);
- Verfahren zum Schweißen von Werkstücken mit Laserstrahlung (EP 0 800 434 B1).

Bei den folgend aufgeführten Beispielen bezüglich des Standes der Technik wird die Tiefschweißwirkung der fokussierten Laserstrahlung mit zusätzlicher Energie und im Falle des Schutzgasschweißens auch mit zusätzlicher Werkstoffzugabe aus einem Lichtbogen kombiniert. Zusatzenergie und gegebenenfalls Zusatzwerkstoff dienen zum Beispiel zur Überbrückung von Fügespalten oder zum Ausgleich von Kantenversatz. Der Wirkungsgrad, die Produktivität und die Qualität des Hybridprozesses sind den Eigenschaften der Einzelprozesse überlegen.

Eine weitere Möglichkeit nutzt die Kombination unterschiedlicher Laserstrahlquellen, zum Beispiel stark fokussierte CO₂-Laserstrahlung mit Diodenlaserstrahlung größerer zum Beispiel linien- oder ringförmiger Wirkflächen, um ein Vor- oder Nachwärmen des Gutes oder eine Vergrößerung des Schmelzvolumens und dadurch dessen bessere Entgasung zu erreichen, siehe zum Beispiel S. Bouss, B. Brenner, E. Beyer: Innovations in laser hybrid technology, Industrial Laser Solutions, January 2001, Penn Well. Des weiteren nutzt ein Patent des Fraunhofer ILT zum Abrand-stabilisierten Brennschneiden die Kombination von mehreren Laserstrahlen oder die Kombination von Laserstrahlung mit anderen Energiequellen aus (DE 41 15 561 C2).

Ferner verwenden sowohl Verfahren der Lasermaterialverarbeitung als auch Lichtbogenprozesse, zum Beispiel MIG/MAG oder WIG zur Zeit bei alleiniger Verwendung für die Material-bearbeitung oder auch in hybrider Kombination mit anderen Werkzeugen teilweise bereits die Möglichkeit der Pulsmodulation zur zeitlichen Steuerung des Bearbeitungsprozesses. Bestimmte Laserquellentypen verfügen allerdings gar nicht über einen Dauer-Betrieb, sondern sind nur im Pulsbetrieb einsetzbar.

Eine Pulsmodulation von Strahlungs-, Lichtbogen-, Plasma- oder anderen Energie-, Impuls- oder Teilchenquellen, zum Beispiel Flamme, spanende Werkzeuge, Wasserstrahl, Elektronenstrahl dienen bei den Einzelverfahren zum Beispiel:
- der gezielten Beeinflussung der Wechselwirkungszeit,
- der dosierten und portionsweisen Energieeinbringung,
- dem dosierten, portionsweisen Materialabtrag (zum Beispiel beim Perkussionsbohren),
- der schonenden Materialbearbeitung mit reduzierter Wärmeeinflußzone durch die Verwendung kurzer Pulsan- und langer Pulsauszeiten,
- der sicheren Tropfenablösung (MSG),
- dem verbesserten Materialübergang (MSG),
- der Spritzerminimierung (MSG),
- der Prozeßstabilisierung in ansonsten instabilen Arbeitsbereichen, zum Beispiel exotherme Überreaktion beim Brennschneiden mit Wärmestau, unruhiger Übergangs-Lichtbogen beim Schutzgasschweißen im mittleren Stromstärkebereich,
- der Erhöhung der Energiestromdichte im Puls bei gegenüber dem Dauer-Betrieb verminderter oder gleicher mittlerer Stromdichte und Streckenenergie, und
- der kurzzeitigen Erhöhung der Prozeßtemperatur und/oder des Verdampfungsanteils in der Wechselwirkungszone.

Bei den bisherigen bekannten Techniken wird vor allem die eingeschränkte Beeinflußbarkeit des Kopplungsgrades der einzelnen Verfahren bei der Kombination zu einem Hybridverfahren als nachteilig empfunden.

Bisher wird zur Festlegung des Kopplungsgrades vor allem der Abstand bzw. der Überlappungsgrad der Wirkbereiche genutzt. Um zum Beispiel die Kopplung von Laserstrahlen und Lichtbogen zu verstärken, werden ihre Fußpunkte auf dem Werkstück angenähert. Um sie zu unterdrücken, werden die Fußpunkte voneinander entfernt. Dabei wird aber gleichzeitig die Größe und Form der Wechselwirkungsgeometrie und die effektive Einwirkzeit verändert, was in bestimmten Fällen sehr nachteilig sein kann. Einige Beispiele werden dies nun näher erläutern.

Gerade beim Einsatz von CO₂-Lasern ist auf die Vermeidung einer Plasmaabschirmung der Laserstrahlung im Lichtbogen oder Plasma zu achten. Gleichzeitig wird aber eine Führung und/oder Konzentration des Lichtbogens durch den fokussierten Laserstrahl angestrebt. Damit liegen sich einander negativ beeinflussende Ziele vor.

Ähnliches kann für die Kombination, zum Beispiel hinsichtlich der Wellenlänge unterschiedlicher Laserstrahlungen gelten, wenn zum Beispiel eine starke Kopplung einerseits zur Ausnutzung der absorbtionserhöhenden Wirkung auf dem Werkstück vorteilhaft ist, zum Beispiel durch die Erzeugung von periodischen Oberflächenstrukturen, andererseits aber eine zu starke Kopplung zur Störung zumindest eines der Verfahren führt, zum Beispiel dadurch, daß dessen Laserstrahlung im durch die andere Laserstrahlung entstehenden Materialdampf oberhalb des Werkstücks absorbiert oder gestreut wird.

Der Erfindung liegt daher die Aufgabe zugrunde, ein Verfahren bzw. eine Vorrichtung der Eingangs genannten Arten anzugeben, die es ermöglichen, mit technisch einfachen Mitteln den Kopplungsgrad und gegebenenfalls auch die Kopplungsart bei der Wirkung der Einzelverfahren in der eingesetzten Hybridtechnik gezielt und variabel auf elektronischem Wege einstellbar zu gestalten.

Die Erfindung ist durch ein Verfahren gemäß Anspruch 1 und eine Vorrichtung gemäß Anspruch 12 definiert.

Mit der Erfindung wird daher der Kopplungsgrad und gegebenenfalls auch die Kopplungsart bei der Wirkung der Einzelverfahren in der eingesetzten Hybridtechnik gezielt und variabel auf elektronischem Wege ohne mechanische Verstellungen am Werkzeug einstellbar, vor allem ohne zwangsläufig auf eine Veränderung des örtlichen Abstandes der Wechselwirkungsbereiche der Einzelverfahren auf oder im Werkstück angewiesen zu sein und ohne auf aus anderen Gründen vorteilhafte Abstandseinstellungen, zum Beispiel den Abstand 0, verzichten zu müssen. Die Werkzeugbestandteile, sind dadurch gezielt synchronisiert.

Gemäß einer Ausführungsform der Erfindung ist es vorgesehen, daß das eine Bearbeitungswerkzeug und das mindestens eine weitere Bearbeitungswerkzeug mit gleicher oder mit relativ zueinander ganzzahlig vielfacher Pulsfrequenz moduliert werden und ihre Pulsmodulationen in einer festen oder variabel gesteuerten oder geregelten Phasenbeziehung stehen.

Eine besonders einfache Steuerung der Modulation ist dann gegeben, wenn die Pulssteuersignale mindestens eines pulsmodulierten Bearbeitungswerkzeugs als Mastersignal verwendet wird zur Triggerung einer synchronisierten Ansteuerung der Pulsmodulation mindestens eines weiteren Bearbeitungswerkzeugs im Slavebetrieb.

Eine weitere Ausführungsform der Erfindung sieht vor, daß eine gleichphasige Synchronisation durchgeführt wird. Es ist aber auch möglich, daß eine gegenphasige Synchronisation durchgeführt wird.

Eine besonders einfache Synchronisation kann dann erreicht werden, wenn der Slavepuls am Anfang oder am Ende des Masterpulses oder umgekehrt erzeugt wird.

Ferner ist es vorgesehen, daß Einzelpulse oder Pulspakete erzeugt werden.

Weiterhin ist es vorteilhaft, wenn die gegebenenfalls nicht extern, das heißt nicht von außerhalb der Werkzeugquellensteuerung, ansteuerbare Strahlung bzw. das Bearbeitungswerkzeug oder das intern mit variabler Pulsfrequenz prozeßgeregelte Bearbeitungswerkzeug der Master ist. Letzteres ist beispielsweise für modernere digitale Stromquellen von Lichtbogenprozessen oder rotierende, spanend bearbeitende Werkzeuge wie zum Beispiel Fräsköpfe, deren Drehfrequenz hier als Pulsfrequenz zu verstehen ist, anwendbar.

Außerdem ist es vorgesehen, daß das weitere Bearbeitungswerkzeug eine Lasereinrichtung und/oder eine Lichtbogenstrahlungseinrichtung und/oder eine Plasmastrahlungseinrichtung und/oder eine oder mehrere andere Energie-, Impuls- oder Teilchenquelle ist.

Ein weiteres vorteilhaftes Verfahren ist dadurch gegeben, die Bearbeitung von Werkstoffen aus der folgenden Auflistung auswählbar ist:
- Trenn- und Abtragverfahren, insbesondere Schneiden, Bohren, Abtragen, Perforieren, Ritzen, Gravieren, Strukturieren oder Reinigen,
- Fügeverfahren, insbesondere Schweißen, Löten oder Bonden,
- Beschichtungs- und Aufbauverfahren, insbesondere Beschichten, Generieren, selektives Sintern oder Rapid Prototyping,
- Oberflächenbehandlung und -Veredelung, insbesondere Härten, Umschmelzen, Legieren, Dispergieren, Polieren und Beschriften, Formen und Biegen,
wobei die Kombination der Bearbeitungswerkzeuge derart gestaltet ist, daß ihre Wirkungsbereiche, die gegebenenfalls Wirkungen unterschiedlichster Art ausgesetzt sind, auf oder im Werkstück während des Bearbeitungsvorganges überlappen oder unmittelbar benachbart sind.

Vorteilhafte Ausführungsformen dieser erfindungsgemäßen Vorrichtung sind in den weiteren Unteransprüchen angegeben. Da diese im wesentlichen den das Verfahren weiterbildenden Unteransprüchen entsprechen, wird auf detaillierte Beschreibung derselben verzichtet.

Weitere Merkmale und Vorteile der Erfindung ergeben sich aus der folgenden Beschreibung mehrerer Ausführungsbeispiele sowie aus den Figuren, auf die Bezug genommen wird. Es zeigen:
- Fig.1: ein Blockdiagramm einer Master-Slave-Triggerung für die Synchronisation der Pulsmodulation mit fester bzw. geregelter Phasenbeziehung; und
- Fig.2: mehrere Diagramme als Beispiele für charakteristische Phasenbeziehungen bei synchronisierter Pulsmodulation für Hybridverfahren.

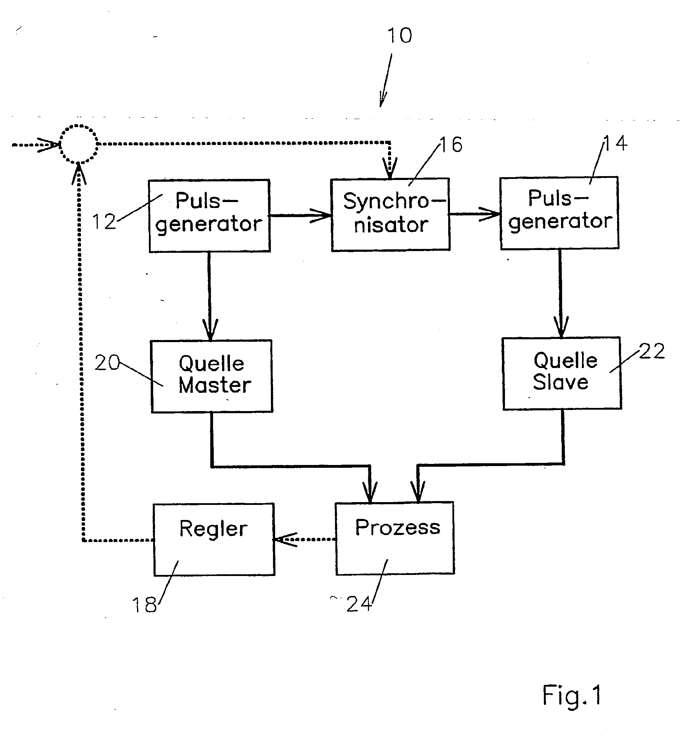

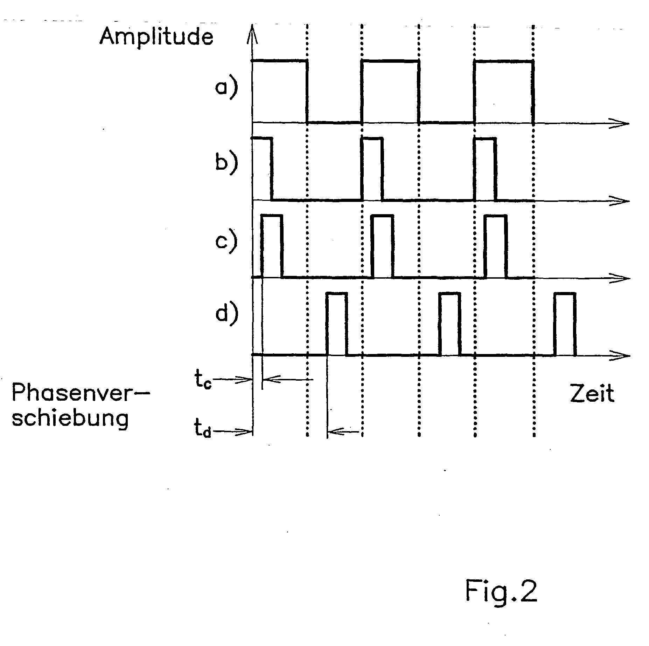

Anhand der Fig.1 und 2 werden nunmehr Verfahren und Vorrichtungen zur Hybridbearbeitung von Werkstoffen durch Kombinieren eines Bearbeitungswerkzeugs mit mindestens einem weiteren Bearbeitungswerkzeug, wobei mindestens ein Bearbeitungswerkzeug Laserstrahlung verwendet.

In Fig.1 ist schematisch eine Vorrichtung 10 zur hybriden Bearbeitung von Werkstoffen durch ein Bearbeitungswerkzeug in Kombination mit mindestens einem weiteren Bearbeitungswerkzeug dargestellt. Die Vorrichtung 10 enthält in dem gezeigten Ausführungsbeispiel einen ersten Pulsgenerator 12 zur Modulation einer Laserstrahlung als ein Bearbeitungswerkzeug. Des weiteren enthält die Vorrichtung 10 einen zweiten Pulsgenerator 14 ebenfalls zur Modulation des weiteren Bearbeitungswerkzeugs.

Zwischen dem ersten Pulsgenerator 12 und dem zweiten Pulsgenerator 14 ist ein Synchronisator 16 zwischengeschaltet, der bei der in Fig.1 gezeigten Vorrichtung 10 Ausgabewerte des ersten Pulsgenerators 12 erhält und wiederum Ausgabewerte dem zweiten Pulsgenerator 14 eingibt. Des weiteren erhält der Synchronisator 16 Eingabewerte, die in Fig.1 mit einer punktierten Linie dargestellt sind.

Ferner gibt der erste Pulsgenerator 12 auch Ausgabewerte einer ersten Quelle 20 ein, die im gezeigten Ausführungsbeispiel als Mastersignal verwendet wird. In einigen Fällen kann es aber vorteilhafter sein, die Quelle 22 des weiteren Bearbeitungswerkzeugs als Master zu verwenden.

In ähnlicher Art und Weise gibt der zweite Pulsgenerator 14 einer zweiten Quelle 22 Ausgabewerte ein, die in dem gezeigten Ausführungsbeispiel als Slave-Signal bzw. für den Slave-Betrieb verwandt wird.

Es werden also mittels der ersten und der zweiten Quelle 20 und 22 Pulssteuersignale des mindestens einen Pulsgenerators 12 als Mastersignal verarbeitet zur Triggerung einer synchronen Ansteuerung der Pulsmodulation der Pulssteuersignale des mindestens einen weiteren Pulsgenerators 14 im Slave-Betrieb.

Wie in Fig.1 angedeutet, gibt es Eingabeeinrichtungen für Prozeßparameter sowie Sensoren für Prozeßergebnisse zur Steuerbarkeit und/oder Regelbarkeit der Phasenbeziehung in Abhängigkeit und/oder zur Beeinflussung eines oder mehrerer Prozeßparameter und/oder in Abhängigkeit von Sensorsignalen.

Die jeweiligen Ausgabesignale der ersten Quelle 20 und der zweiten Quelle 22 werden für den Prozeßbetrieb verwandt, was in Fig.1 in dem Kasten "Prozeß" mit den Bezugszeichen 24 angedeutet ist.

Die oben erwähnten Sensorsignale werden einem Regler 18 zugeführt, der wiederum mit einer Eingabeeinrichtung und somit darüber auch wieder mit dem Synchronisator 16 verbunden ist.

Die ersten und zweiten Pulsgeneratoren 12 und 14 und der Synchronisator 16 sind daher dazu ausgelegt, die Laserstrahlung und das mindestens eine weitere Bearbeitungswerkzeug relativ zueinander ganzzahlig vielfache Pulsfrequenz zu modulieren und die Pulsmodulationen der ersten und zweiten Pulsgeneratoren 12 und 14 in einer festen oder mittels des Reglers 18 in eine variabel gesteuerte oder geregelte Phasenbeziehung zu stellen.

Unter anderem kann der Synchronisator 16 für eine gleichphasige Synchronisation ausgelegt sein. Es ist aber auch möglich, den Synchronisator 16 für eine gegenphasige Synchronisation auszulegen. Schließlich besteht noch die Möglichkeit, den Synchronisator 16 für eine Erzeugung des SlavePulses am Anfang oder am Ende des Masterpulses oder umgekehrt zu verwenden.

Dabei können die ersten und zweiten Pulsgeneratoren 12 und 14 so ausgelegt sein, daß sie Einzelpulse und/oder Pulspakete erzeugen können.

In Fig.2 sind mehrere Diagramme als Beispiele für charakteristische Phasenbeziehungen bei synchronisierter Pulsmodulation im Hybridverfahren dargestellt. Das mit a) bezeichnete Diagramm stellt dabei die Modulation des Masters dar. Das Diagramm b) gibt die gleichphasige Slave-Modulation wieder.

Wie sich aus dem Diagramm c) ergibt, ist es auch möglich, die Slave-Modulation mit geringer Phasenverschiebung, in diesem Fall um t_{c} verschoben, zu verwenden. Dies bedeutet ein endlicher zeitlicher Überlapp der Pulsanzeiten, das kann aber auch bei kürzerer Pulsanzeit des Slave einen gemeinsamen Pulsabfallzeitpunkt mit dem Master bedeuten. Schließlich gibt das Didagramm d) eine gegenphasige Slave-Modulation wieder. Dabei ergibt sich kein zeitlicher Überlapp der Pulse, die Pulse können aber auch in direkter Folge verlaufen. Bei dem Diagramm d) besteht eine Phasenverschiebung von t_{d}.

Generell kann also gesagt werden, daß eine gezielte Einstellung des Prozeßzyklus durch angepaßte Synchronisation möglich ist. Beispiele für den Prozeßzyklus sind Temperatur-, Eigenspannungs-, Reaktions-, Materialauftrags-, Materialabtrags-, Materialverbindungs-, Materialtrennungs- sowie Phasenumwandlungs-Zeitverläufe.

Eine starke Kopplung, also eine gleichphasig synchronisierte Pulsmodulation, bewirkt eine Verbesserung des Tiefschweißeffektes des Lasers, eine Verbesserung des Pinch-Effektes zur Tropfenablösung des MIG Prozesses sowie eine Verbesserung der Lichtbogenführung und -Kontraktion durch den fokussierten Laser.

Eine Entkopplung, also eine gegenphasig synchronisierte Modulation, wirkt sich vorteilhaft aus für eine Verhinderung der Laserstrahlabschirmung und/oder -Streuung und/oder -Brechung im Lichtbogenplasma. Die zeitliche Trennung und damit Entstörung von Kapillarausbildung und Tropfenablösung mit Werkstoffübergang beim Laser-MIG-Hybridschweißen sind dabei ebenfalls möglich.

Es ist aber auch eine angepaßte Kopplung, also eine gezielte Phasenverschiebung der synchronen Pulsmodulation des einen Werkzeugbestandteils bzw. der einen Strahlung erreichbar. Beispiele dafür sind schwellenabhängige Teilprozesse, die erst nach Erreichen oder Überschreiten einer Prozeßschwelle durch den Vorpuls des anderen Werkzeugbestandteils bzw. der mindestens einen weiteren Strahlung mit dem entsprechend phasenverzögerten Nachpuls effektiv zur Wirkung kommen. Die Phasenverzögerung wird dabei variiert zur Optimierung von Wirkungsart, Wirkungsgrad, Produktivität, Stabilität sowie Qualität des Hybridprozesses.

Das weitere Bearbeitungswerkzeug kann eine Laserstrahlung und/oder eine Lichtbogenstrahlung und/oder eine Plasmastrahlung und/ oder eine oder mehrere andere Energie-, Impuls- oder Teilchenquellen sein.

Es werden nun einige Wirkungen beschrieben, und zwar der Vorpulsung durch einen Laser, der Vorpulsung durch einen Lichtbogen- oder Plasmastrahl sowie einer Nachpulsung.

Die Wirkungen der Vorpulsung durch einen Laser sind:
- Vorwärmen, zum Beispiel zur besseren Benetzbarkeit von Werkstoffen oder zur metallurgischen Einstellung des Prozesses,
- Reinigen,
- Entschichten,
- Vorionisieren,
- chemische Aktivierung,
- Vorschmelzen (Vorprozeß).

Die Wirkungen und Auswirkungen der Vorpulsung durch einen Lichtbogen oder einen Plasmastrahl sind:
- Vorwärmen,
- Absorbtionserhöhung für den Laserstrahl durch Oberflächenveränderung, zum Beispiel durch Ändern der Temperatur, Struktur, des Materials und/oder durch eine chemische Reaktion,
- Absorbtionserhöhung für den Laserstrahl durch Veränderung der oberflächennahen Atmosphäre und damit des relativen Brechungsindex,
- portionierte Energie- und Materialzufuhr, zum Beispiel zur Überbrückung von Fügespalten.

Eine Nachpulsung kann folgende Wirkungen bzw. Auswirkungen haben:
- Nachwärmen,
- Oberflächenfinish durch Energie- oder Materialzufuhr,
- Entgasen der Schmelze beim Schweißen und Beschichten,
- Materialabtrag oder Materialverbindung nach Vorbereitung durch einen Vorpuls,
- chemische Reaktion, zum Beispiel Verbinden oder Trennen, nach einer Vorbereitung durch einen Vorpuls.

Ferner ist es möglich, folgende Größen zu modulieren:
- Leistung,
- Strom,
- Spannung,
- Geschwindigkeit, zum Beispiel des Drahtvorschubes des Zusatzstoffes bzw. der abschmelzenden Elektrode,
- Frequenz.

Dabei können die Parameter der Modulation folgender Art sein:
- Grundniveau,
- Pulsfrequenz,
- Pulslänge, Pulspause oder Tastverhältnis,
- Pulsspitzenwert,
- Haltezeit für den Pulsspitzenwert,
- zeitlicher Verlauf des Pulsanstieges,
- zeitlicher Verlauf des Pulsabfalls.

Mit der Erfindung wird also der Kopplungsgrad und gegebenenfalls auch die Kopplungsart bei der Wirkung der Einzelverfahren mit der eingesetzten Hybridtechnik erzielt und variabel auf elektronischem Weg ohne mechanische Verstellungen am Werkzeug einstellbar. Vor allem ohne zwangsläufig auf eine Veränderung des örtlichen Abstandes der Wechselwirkungsbereiche der Einzelverfahren auf oder im Werkstück angewiesen zu sein und ohne auf die aus anderen Gründen vorteilhafte Abstandseinstellungen, zum Beispiel den Abstand 0, verzichten zu müssen. Es ist des weiteren möglich, wo es vorteilhaft ist, die Kopplung sogar über den Grad hinaus, der bereits allein durch vollständige Überlappung der Wechselwirkungszonen bzw. bei identischem Fußpunkt der Einzelprozesse auf oder in dem Werkstück gegeben ist, verstärkt werden kann. Andererseits ist durch die Erfindung auch in dieser Konfiguration eine weitgehende Entkopplung der Einzelprozesse erzielbar, soweit es für die hybride Prozeßwirkung wünschenswert ist.

### Bezugszeichenliste:

- 10: Vorrichtung
- 12: erster Pulsgenerator
- 14: zweiter Pulsgenerator
- 16: Synchronisator
- 18: Regler
- 20: erste Quelle
- 22: zweite Quelle
- 24: Prozess

## Patentansprüche

1. verfahren zur Bearbeitung von Werkstoffen durch Kombinieren eines gepulsten modulierten Bearbeitungswerkzeugs mit mindestens einem weiteren gepulsten modulierten Bearbeitungewerkzeug, wobei mindestens ein Bearbeitungswerkzeug Laserstrahlung verwendet, wobei eine synchronisierte Modulation des einen Bearbeitungswerkzeugs bei der Kombination mit dem pulsmodulierten weiteren Bearbeitungswerkzeug durchgeführt wird **dadurch gekennzeichnet, dass** die Phasenbeziehung der Pulsmodulation der beiden Bearbeitungswerkzeuge in Abhängigkeit von einem oder mehreren Prozeßparametern und/oder von sensorsignalen geregelt wird.

2. Verfahren nach Anspruch 1, **dadurch gekennzeichnet, daß** das eine Bearbeitungswerkzeug und das mindestens eine weitere Bearbeitungswerkzeug mit gleicher oder mit relativ zueinander ganzzahlig vielfacher Pulsfrequenz moduliert werden.

3. Verfahren nach Anspruch 1 oder 2, **dadurch gekennzeichnet, daß** die Pulssteuersignale mindestens eines pulsmodulierten Bearbeitungswerkzeugs als Mastersignal verwendet wird zur Triggerung einer synchronisierten Ansteuerung der Pulsmodulation mindestens eines weiteren Bearbeitungswerkzeugs im Slavebetrieb.

4. Verfahren nach einem der Ansprüche 1 bis 3, **dadurch gekennzeichnet, daß** eine gleichphasige Synchronisation durchgeführt wird.

5. Verfahren nach einem der Ansprüche 1 bis 4, **dadurch gekennzeichnet, daß** eine gegenphasige Synchronisation durchgeführt wird.

6. Verfahren nach einem der Ansprüche 1 bis 5, **dadurch gekennzeichnet, daß** der Slavepuls am Anfang oder am Ende des Masterpulses oder umgekehrt erzeugt wird.

7. Verfahren nach einem der Ansprüche 1 bis 6, **dadurch gekennzeichnet, daß** Einzelpulse oder Pulspakete erzeugt werden.

8. Verfahren nach einem der Ansprüche 1 bis 7, **dadurch gekennzeichnet, daß** das gegebenenfalls nicht extern ansteuerbare Bearbeitungswerkzeug der Master ist.

9. Verfahren nach einem der Ansprüche 1 bis 8, **dadurch gekennzeichnet, daß** das intern mit variabler Pulsfrequenz prozeßgeregelte Bearbeitungswerkzeug der Master ist.

10. Verfahren nach einem der Ansprüche 1 bis 9, **dadurch gekennzeichnet, daß** das weitere Bearbeitungswerkzeug eine Lasereinrichtung und/oder eine Lichtbogenstrahlungseinrichtung und/oder eine Plasmastrahlungseinrichtung und/oder eine oder mehrere andere Energie-, Impuls- oder Teilchenquelle ist.

11. Verfahren nach einem der Ansprüche 1 bis 10, **dadurch gekennzeichnet, daß** die Bearbeitung von Werkstoffen aus der folgenden Auflistung auswählbar ist:
- Trenn- und Abtragverfahren, insbesondere Schneiden, Bohren, Abtragen, Perforieren, Ritzen, Gravieren, Strukturieren oder Reinigen,
- Fügeverfahren, insbesondere Schweißen, Löten oder Bonden,
- Beschichtungs- und Aufbauverfahren, insbesondere Beschichten, Generieren, selektives Sintern oder Rapid Prototyping,
- Oberflächenbehandlung und -Veredelung, insbesondere Härten, Umschmelzen, Legieren, Dispergieren, Polieren und Beschriften, Formen und Biegen,
wobei die Kombination der Bearbeitungswerkzeuge derart gestaltet ist, daß ihre Wirkungsbereiche, die gegebenenfalls Wirkungen unterschiedlichster Art ausgesetzt sind, auf oder im Werkstück während des Bearbeitungsvorganges überlappen oder unmittelbar benachbart sind.

12. Vorrichtung (10) zur hybriden Bearbeitung von Werkstoffen durch ein Bearbeitungswerkzeug in Kombination mit mindestens einem weiteren Bearbeitungswerkzeug, wobei mindestens ein Bearbeitungswerkzeug Laserstrahlung verwendet, aufweisend einen ersten Pulsgenerator (12) zur Modulation der Laserstrahlung, einen zweiten Pulsgenerator (14) zur Modulation des weiteren Bearbeitungswerkzeugs und einen Synchronisator (16) zur synchronen Modulation der Kombination **gekennzeichnet, durch** Eingabeeinrichtungen für Prozeßparameter und **durch** Sensoren für Prozeßergebnisse zur Regelbarkeit der Phasenbeziehung in Abhängigkeit von einem oder mehreren Prozeßparametern und/oder von Sensorsignalen.

13. Vorrichtung (10) nach Anspruch 12, **dadurch gekennzeichnet, daß** die Pulsgeneratoren (12,14) und der Synchronisator (16) dazu ausgelegt sind, die Laserstrahlung und das mindestens eine weitere Bearbeitungswerkzeug mit gleicher oder mit relativ zueinander ganzzahlig vielfacher Pulsfrequenz zu modulieren, und daß die Modulationen der Pulsgeneratoren (12,14) mittels eines Reglers (18) in einer geregelten Phasenbeziehung stehen.

14. Vorrichtung (10) nach Anspruch 13, **dadurch gekennzeichnet, daß** mittels mindestens einer ersten und einer zweiten Quelle (20,22) Pulssteuersignale des mindestens einen Pulsgenerators (12) als Mastersignal verarbeitbar sind zur Triggerung einer synchronen Ansteuerung der Pulsmodulation der Pulssteuersignale des mindestens einen weiteren Pulsgenerators (14) im Slavebetrieb, oder umgekehrt.

15. Vorrichtung (10) nach einem der Ansprüche 13 bis 14, **dadurch gekennzeichnet, daß** der Synchronisator (16) für eine gleichphasige Synchronisation ausgelegt ist.

16. Vorrichtung (10) nach einem der Ansprüche 13 bis 15, **dadurch gekennzeichnet, daß** der Synchronisator (16) für eine gegenphasige Synchronisation ausgelegt ist.

17. Vorrichtung (10) nach einem der Ansprüche 13 bis 16, **dadurch gekennzeichnet, daß** der Synchronisator (16) ausgelegt ist für eine Erzeugung des Slavepulses am Anfang oder am Ende des Masterpulses.

18. Vorrichtung (10) nach einem der Ansprüche 13 bis 19, **dadurch gekennzeichnet, daß** die Pulsgeneratoren (12,14) ausgelegt sind zur Erzeugung von Einzelpulsen und/oder von Pulspaketen.

19. Vorrichtung (10) nach einem der Ansprüche 13 bis 19, **dadurch gekennzeichnet, daß** die weitere Strahlung eine Laserstrahlung und/oder eine Lichtbogenstrahlung und/oder eine Plasmastrahlung und/oder eine oder mehrere andere Energie-, Impuls- oder Teilchenquelle ist.

## Claims

1. Method for machining materials by combination of a pulse-modulated machining tool with at least one further pulse-modulated machining tool, with at least one machining tool using laser radiation, one machining tool being subjected to synchronized modulation in the combination with the pulse-modulated further machining tool, **characterized in that** the phase relationship of the pulse modulation of the two machining tools is regulated as a function of one or more process parameters and/or of sensor signals.

2. Method according to Claim 1, **characterized in that** one machining tool and the at least one further machining tool are modulated at the same pulse repetition frequency or at pulse repetition frequencies which are integer multiples of one another.

3. Method according to Claim 1 or 2, **characterized in that** the pulse control signals of at least one pulse-modulated machining tool are used as a master signal for triggering synchronized control of the pulse modulation of at least one further machining tool in the slave mode.

4. Method according to one of Claims 1 to 3, **characterized in that** in-phase synchronization is carried out.

5. Method according to one of Claims 1 to 4, **characterized in that** antiphase synchronization is carried out.

6. Method according to one of Claims 1 to 5, **characterized in that** the slave pulse is produced at the start or at the end of the master pulse, or vice versa.

7. Method according to one of Claims 1 to 6, **characterized in that** individual pulses or pulse packets are produced.

8. Method according to one of Claims 1 to 7, **characterized in that** that machining tool which it may not be possible to control externally is the master.

9. Method according to one of Claims 1 to 8, **characterized in that** that machining tool which is process-regulated internally at a variable pulse repetition frequency is the master.

10. Method according to one of Claims 1 to 9, **characterized in that** the further machining tool is a laser device and/or an arc radiation device and/or a plasma radiation device and/or one or more other energy, pulse or particle sources.

11. Method according to one of Claims 1 to 10, **characterized in that** the machining of materials can be selected from the following listing:
- separation and removal methods, in particular cutting, drilling, removal, perforation, scratching, engraving, structuring or cleaning,
- joining methods, in particular welding, soldering or bonding,
- coating and building-up methods, in particular coating, generation, selective sintering or rapid prototyping,
- surface treatment and refinement, in particular hardening, remelting, alloying, dispersion, polishing and inscription, shaping and bending,
in which the combination of the machining tools is designed in such a manner that their areas of operation, which may be subject to effects of a widely differing nature, overlap or are immediately adjacent on or in the workpiece during the machining process.

12. Apparatus (10) for hybrid machining of materials by means of a machining tool in combination with at least one further machining tool, with at least one machining tool using laser radiation, having a first pulse generator (12) for modulation of the laser radiation, a second pulse generator (14) for modulation of the further machining tool and a synchronizer (16) for synchronous modulation of the combination, **characterized by** input devices for process parameters, and by sensors for process results for the capability to regulate the phase relationship as a function of one or more process parameters and/or of sensor signals.

13. Apparatus (10) according to Claim 12, **characterized in that** the pulse generators (12, 14) and the synchronizer (16) are designed to modulate the laser radiation and the at least one further machining tool with the same pulse repetition frequency or with pulse repetition frequencies which are integer multiples of one another, and **in that** the modulations of the pulse generators (12, 14) have a phase relationship which is regulated by means of a regulator (18).

14. Apparatus (10) according to Claim 13, **characterized in that** pulse control signals of the at least one pulse generator (12) can be processed as a master signal by means of at least one first and one second source (20, 22), in order to trigger synchronous control of the pulse modulation of the pulse control signals of the at least one further pulse generator (14) in the slave mode, or vice versa.

15. Apparatus (10) according to one of Claims 13 to 14, **characterized in that** the synchronizer (16) is designed for in-phase synchronization.

16. Apparatus (10) according to one of Claims 13 to 15, **characterized in that** the synchronizer (16) is designed for antiphase synchronization.

17. Apparatus (10) according to one of Claims 13 to 16, **characterized in that** the synchronizer (16) is designed for production of the slave pulse at the start or at the end of the master pulse.

18. Apparatus (10) according to one of Claims 13 to 17, **characterized in that** pulse generators (12, 14) are designed for production of individual pulses and/or of pulse packets.

19. Apparatus (10) according to one of Claims 13 to 18, **characterized in that** the further radiation is laser radiation and/or arc radiation and/or plasma radiation and/or one or more other energy, pulse or particle sources.

## Revendications

1. Procédé d'usinage de matériaux en combinant un outil d'usinage modulé par impulsion avec au moins un autre outil d'usinage modulé par impulsion, selon lequel au moins un outil d'usinage utilise un rayon laser et on réalise une modulation synchronisée de l'un des outils d'usinage avec la combinaison de l'autre outil d'usinage modulé par impulsion,
**caractérisé en ce que**
la relation de phase de la modulation par impulsion des deux outils d'usinage est réglée en fonction d'un ou plusieurs paramètre(s) de processus et/ ou de signaux de capteur.

2. Procédé selon la revendication 1,
**caractérisé en ce qu'**
un outil d'usinage et au moins un autre outil d'usinage sont modulés avec la même fréquence d'impulsion ou avec une fréquence d'impulsion d'un multiple entier l'une par rapport à l'autre.

3. Procédé selon la revendication 1 ou 2,
**caractérisé en ce qu'**
on utilise les signaux de commande d'impulsions d'au moins un outil d'usinage modulé par impulsion comme signal maître pour déclencher une commande synchronisée de la modulation par impulsion d'au moins un autre outil d'usinage en fonctionnement esclave.

4. Procédé selon l'une des revendications 1 à 3,
**caractérisé en ce qu'**
on réalise une synchronisation sur la même phase.

5. Procédé selon l'une des revendications 1 à 4,
**caractérisé en ce qu'**
on réalise une synchronisation en phase opposée.

6. Procédé selon l'une des revendications 1 à 5,
**caractérisé en ce que**
l'impulsion esclave est générée au début ou à la fin de l'impulsion maître, ou inversement.

7. Procédé selon l'une des revendications 1 à 6,
**caractérisé en ce qu'**
on génère des impulsions individuelles ou des paquets d'impulsions.

8. Procédé selon l'une des revendications 1 à 7,
**caractérisé en ce que**
l'outil d'usinage qui peut éventuellement ne pas être commandé de manière externe est le maitre.

9. Procédé selon l'une des revendications 1 à 8,
**caractérisé en ce que**
l'outil d'usinage réglé par un processus interne avec une fréquence d'impulsion variable est le maître.

10. Procédé selon l'une des revendications 1 à 9,
**caractérisé en ce que**
l'autre outil d'usinage est un dispositif laser et/ou un dispositif de rayonnement à arc électrique et/ou un dispositif à rayon plasma et/ou une ou plusieurs autre(s) source(s) d'énergie, d'impulsions ou de particules.

11. Procédé selon l'une des revendications 1 à 10,
**caractérisé en ce qu'**
on peut sélectionner un usinage de matériaux à partir de la liste suivante :
- procédé de séparation et d'enlèvement, en particulier par découpage, perçage, enlèvement, perforation, entamage, gravage, structuration ou décapage,
- procédé d'assemblage, en particulier par soudage, brasage ou collage,
- procédé de revêtement et de construction, en particulier par revêtement, génération, frittage sélectif ou « rapid prototyping » (prototypage rapide),
- traitement et raffinage de surface, en particulier par durcissage, fusion, alliage, dispersion, polissage et inscription, formage et cintrage,
la combinaison des outils d'usinage étant telle que leurs zones d'action éventuellement exposées à des actions de type très différent, se chevauchent ou sont directement adjacentes sur la pièce à usiner ou dans celle-ci pendant le processus d'usinage.

12. Dispositif (10) d'usinage hybride de matériaux à l'aide d'un outil d'usinage combiné à au moins un autre outil d'usinage, dans lequel au moins un outil d'usinage utilise un rayon laser, présentant un premier générateur d'impulsions (12) pour moduler le rayon laser, un deuxième générateur d'impulsions (14) pour moduler l'autre outil d'usinage et un synchroniseur (16) pour moduler de manière synchrone les dispositifs combinés,
**caractérisé par**
des dispositifs d'entrée de paramètres de processus et par des capteurs de résultats de processus pour pouvoir réguler la relation de phase en fonction d'un ou de plusieurs paramètres de processus et/ou de signaux de capteurs.

13. Dispositif (10) selon la revendication 12,
**caractérisé en ce que**
les générateurs d'impulsions (12, 14) et le synchroniseur (16) sont prévus pour moduler le rayon laser et au moins un autre outil d'usinage avec une même fréquence d'impulsion ou avec une fréquence d'impulsion d'un multiple entier l'une par rapport à l'autre, et
les modulations des générateurs d'impulsions (12, 14) se trouvent dans une relation de phase régulée au moyen d'un régulateur (18).

14. Dispositif (10) selon la revendication 13,
**caractérisé en ce que**
les signaux de commande d'impulsions d'au moins un générateur d'impulsions (12) peuvent être traités comme un signal maître au moyen d'au moins une première et une deuxième source (20, 22) pour déclencher une commande synchrone de la modulation par impulsion des signaux de commande d'impulsions d'au moins un autre générateur d'impulsions (14) en fonctionnement esclave, ou inversement.

15. Dispositif (10) selon l'une des revendications 13 à 14,
**caractérisé en ce que**
le synchroniseur (16) est prévu pour une synchronisation sur la même phase.

16. Dispositif (10) selon l'une des revendications 13 à 15,
**caractérisé en ce que**
le synchroniseur (16) est prévu pour une synchronisation en phase opposée.

17. Dispositif (10) selon l'une des revendications 13 à 16,
**caractérisé en ce que**
le synchroniseur (16) est prévu pour générer l'impulsion esclave au début ou à la fin de l'impulsion maître.

18. Dispositif (10) selon l'une des revendications 13 à 17,
**caractérisé en ce que**
les générateurs d'impulsions (12, 14) sont prévus pour générer des impulsions individuelles et/ ou des paquets d'impulsions.

19. Dispositif (10) selon l'une des revendications 13 à 18,
**caractérisé en ce que**
l'autre rayon est un rayon laser et/ou un rayon à arc électrique et/ou un rayon plasma et/ou une ou plusieurs autre(s) source(s) d'énergie, d'impulsion ou de particules.
